# EUROPEAN PATENT APPLICATION

(11) **EP 3 745 801 A1**
(43) Date of publication of application: **02.12.2020**
(21) Application number: 18903997.7
(22) Date of filing: 01.02.2018
(51) Int. Cl.: H04W 74/08, H04W 28/04

(54) **CHANNEL TRANSMISSION METHOD, AND RELATED PRODUCTS**

(71) Applicant: GUANGDONG OPPO MOBILE TELECOMMUNICATIONS CORP., LTD., Wusha, Chang'an Dongguan, Guangdong 523860 (CN)
(72) Inventor: TANG, Hai, Dongguan, Guangdong 523860 (CN)
(74) Representative: Penza, Giancarlo
(86) International application number: PCT/CN2018/075004
(87) International publication number: WO 2019/148438

(57) **Abstract**

Disclosed are a channel transmission method, and related products. The method comprises: a network device transmitting a plurality of frequency-divided discovery reference signals (DRSs), wherein the maximum channel bandwidth determined by the frequency domain location of the plurality of frequency-divided DRSs is greater than or equal to a reference width. The embodiments of the present application benefit improving the quality of signal transmission, on an unlicensed frequency spectrum, between a network device and a terminal.

## Description

### Technical Field

The present application relates to a field of communication technology, and in particular, to a channel transmission method and related products.

### Background

In a traditional 3GPP (3rd Generation Partner Project) Long Term Evolution (LTE) system, the data transmission may only occur on a Licensed Spectrum. However, with a rapid increase of traffics, especially in some urban areas, the licensed spectrum may be difficult to meet a demand of the traffics. In a 65th meeting of 3GPP RAN, a Licensed-assisted access (LAA) has been adopted to enable the communication using LTE technology on an unlicensed spectrum.

The unlicensed spectrum is a spectrum divided by countries and regions and may be used for radio device communication. The spectrum is usually considered as a shared spectrum, that is, communication devices in different communication systems may use the spectrum as long as they meet a regulatory requirement on the spectrum configured by the countries or the regions, without applying to a government for an exclusive spectrum license. In order to enable various communication systems using the unlicensed spectrum for wireless communication to coexist friendly on the spectrum, some countries or regions have defined a regulatory requirement that must be met when using the unlicensed spectrum. For example, in Europe, the communication device follows a "listen-before-talk (LBT)" principle, i.e. the communication device needs to perform the channel listening before sending a signal on a channel of the unlicensed spectrum. Only when a channel listening result is that the channel is idle, may the communication device perform a signal transmission. If the channel listening result of the communication device on the channel of the unlicensed spectrum is that the channel is busy, the communication device may not perform the signal transmission. And in order to ensure fairness, in one transmission, the duration of the signal transmission by the communication device using the channel of the unlicensed spectrum may not exceed a Maximum Channel Occupation Time (MCOT). At present, how to improve the quality of signal transmission on the unlicensed spectrum is a problem to be solved.

### Summary

A channel transmission method and related products is provided by an embodiment of present application, which are beneficial to the quality of signal transmission between a network device and a terminal on an unlicensed spectrum.

In a first aspect, a channel transmission method is provided by an embodiment of the present application, comprising:
sending, by a network device, multiple frequency division discovery signals (DRSs), wherein a maximum channel bandwidth determined by frequency domain positions of the multiple frequency division DRSs is greater than or equal to a reference bandwidth.

In a second aspect, a channel transmission method is provided by an embodiment of the present application, comprising:
receiving, by a terminal, multiple frequency division discovery signals (DRSs) from a network device, wherein a maximum channel bandwidth determined by frequency domain positions of the multiple frequency division DRSs is greater than or equal to a reference bandwidth.

In a third aspect, a network device is provided by an embodiment of the present application. The network device has functions implementing actions of a first network device designed in the above method. The functions may be implemented by using hardware, or may be implemented by executing the corresponding software through the hardware. The hardware or software includes one or more modules corresponding to the above functions. In a possible design, the network device includes a processor, wherein the processor is configured to support the network device to perform corresponding functions in the above method. Further, the network device may include a transceiver, wherein the transceiver is configured to support the communication between a terminal and the network device. Further, the network device may include a memory, wherein the memory is configured to couple to the processor, and store essential program instructions and data of the network device.

In a fourth aspect, a terminal is provided by an embodiment of the present application. The terminal has functions of implementing actions of the terminal designed in the above method. The functions may be implemented by using hardware, or may be implemented by executing the corresponding software through the hardware. The hardware or software includes one or more modules corresponding to the above functions. In a possible design, the terminal includes a processor, wherein the processor is configured to support the terminal to execute corresponding functions in the above method. Further, the terminal may include a transceiver, wherein the transceiver is configured to support the communication between the terminal and a network device. Further, the terminal may include a memory, wherein the memory is configured to couple to the processor, and store essential program instructions and data of the terminal.

In a fifth aspect, a network device is provided by an embodiment of the present application. The network device includes a processor, a memory, a transceiver, and one or more programs, wherein the one or more programs are stored in the memory and configured to be executed by the processor, and the program includes instructions for executing acts in any one of the methods of the first aspect in the embodiment of the present application.

In a sixth aspect, a terminal is provided by an embodiment of the present application. The terminal includes a processor, a memory, a communication interface, and one or more programs, wherein the one or more programs are stored in the memory and configured to be executed by the processor, and the program includes instructions for executing acts in any one of the methods of the second aspect in the embodiment of the present application.

In a seventh aspect, a computer-readable storage medium is provided by an embodiment of the present application. The computer-readable storage medium stores computer programs for electronic data interchange. The computer programs enable a computer to execute a part or all of acts as described in any one of the methods of the first aspect in the embodiment of the present application.

In an eighth aspect, a computer-readable storage medium is provided by an embodiment of the present application. The computer-readable storage medium stores computer programs for electronic data interchange. The computer programs enable a computer to execute a part or all of acts as described in any one of the methods of the second aspect in the embodiment of the present application.

In a ninth aspect, a computer program product is provided by an embodiment of the present application. The computer program product includes a non-transitory computer-readable storage medium storing computer programs. The computer programs are operable to enable a computer to execute a part or all of acts as described in any one of the methods of the first aspect of the embodiment of the present application. The computer program product may be a software installation package.

In a tenth aspect, a computer program product is provided by an embodiment of the present application. The computer program product includes a non-transitory computer-readable storage medium storing computer programs. The computer programs are operable to enable a computer to execute a part or all of acts as described in any one of the methods of the second aspect in the embodiment of the present application. The computer program product may be a software installation package.

It may be seen, in the embodiment of the present application, a network device transmits multiple frequency division DRSs, wherein a maximum channel bandwidth determined by frequency domain positions of the multiple frequency division DRSs is greater than or equal to a reference bandwidth. Since the reference bandwidth may meet a power spectral density requirement of signals sent on an unlicensed spectrum, and under a same power spectral density requirement, the larger a current maximum channel bandwidth is, the higher the corresponding signal transmission power is. Thus it is beneficial to improving the quality of signal transmission between the network device and a terminal on the unlicensed spectrum.

### Brief Description of Drawings

The following is a brief description of accompanying drawings which are required for describing embodiments or the prior art.
FIG. 1A is a diagram of a network architecture of a possible communication system provided by an embodiment of present application.
FIG. 1B is a signal composition exemplary diagram of an SSB provided by an embodiment of present application.
FIG. 2A is a schematic flowchart of a channel transmission method provided by an embodiment of present application.
FIG. 2B is an example diagram of determining frequency domain positions of 2 DRSs from a target channel bandwidth provided by an embodiment of present application.
FIG. 2C is a frequency domain position exemplary diagram of SSB of 2 cells interleaved with each other provided by an embodiment of present application.
FIG. 3 is a schematic flowchart of a channel transmission method provided by an embodiment of present application.
FIG. 4 is a schematic flowchart of a channel transmission method provided by an embodiment of present application.
FIG. 5 is a schematic diagram of structure of a network device provided by an embodiment of present application.
FIG. 6 is a schematic diagram of structure of a terminal provided by an embodiment of present application;
FIG. 7 is a schematic diagram of structure of a network device provided by an embodiment of the present application.
FIG. 8 is a schematic diagram of structure of a terminal according to an embodiment of the present application.

### Detailed Description

Following describes technical solutions in embodiments of present application with reference to accompanying drawings.

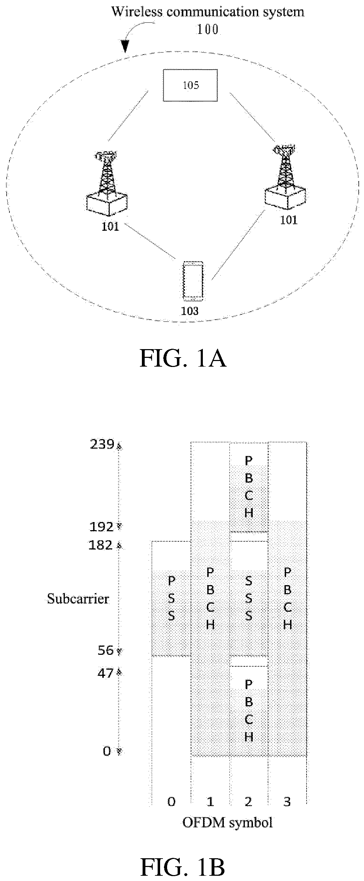

As an example, FIG. 1A shows a wireless communication system relating to the present application. The wireless communication system 100 may work on a high frequency band, not limited to a Long Term Evolution (LTE) system, and may be a 5th Generation mobile communication (the 5th Generation, 5G) system evolved in the future, a New Radio (NR) system, a Machine to Machine (M2M) system, or the like. The wireless communication system 100 may include: one or more network devices 101, one or more terminals 103, and a core network device 105. The network device 101 may be a base station. The base station may be configured to communicate with one or more terminals, and also may be configured to communicate with one or more base stations with partial terminal functions (such as a macro base station and a micro base station). The base station may be a Base Transceiver Station (BTS) in a Time Division Synchronous Code Division Multiple Access (TD-SCDMA) system, also may be an Evolutional Node B (eNB) in an LTE system, and a base station in the 5G system or the NR system. In addition, the base station may be an Access Point (AP), a Transport point (TRP), a Central Unit (CU), or other network entities, and may include a part or all of functions of the above network entities. The core network device 105 includes a device of a core network side such as an Access and Mobility Management Function (AMF) entity, a User Plane Function (UPF) entity, and a Session Management Function (SMF), etc. The terminal 103 may be distributed throughout an overall wireless communication system 100, which may be static or mobile. In some embodiments of the present application, the terminal 103 may be a mobile device (e.g., a smart phone), a mobile station, a mobile unit, an M2M terminal, a wireless unit, a remote unit, a user agent, and a mobile client, etc.

It should be noted that the wireless communication system 100 shown in FIG. 1A is only for more clearly explaining technical solutions of the present application, and does not constitute a limitation to the present application. Those of ordinary skill in the art should know that, with the evolution of a network architecture and emergence of new service scenarios, the technical solutions provided by the present application are also applicable to similar technical problems.

Related technologies relating to the present application are described below.

A LAA-LTE system based on the LTE system is based on carrier aggregation, takes a carrier on a licensed spectrum as a primary carrier and takes a carrier on an unlicensed spectrum as a secondary carrier to provide services to a terminal device. In the LAA-LTE system, the primary carrier may be used for ensuring the initial access of the terminal device and transmission performance of some critical services, while the secondary carrier on the unlicensed spectrum may be used to transmit non-critical big data services of the terminal device. In a NR system, 3GPP also plans to introduce the NR-unlicensed technology for performing communication using NR technology on the unlicensed spectrum.

In the LAA-LTE system of the LTE system, the network device needs to send a Discovery Signal (DRS) signal on the unlicensed carrier, so that the terminal of a local cell can complete the synchronization with a cell on the unlicensed carrier, and a terminal of a neighboring cell can complete a radio resource management (RRM) measurement (RSRP, RSRQ, etc.) on the signal of the local cell. The DRS in the LTE system includes a PSS, a SSS, and a cell-specific reference signal (CRS). Optionally, the DRS may also include a channel state information reference signal (CSI-RS). Taking that the DRS includes the PSS, the SSS and the CRS as an example, the transmission of the DRS in the LAA-LTE system of the LTE system is described. On the unlicensed spectrum, the network device may send the DRS in a Discovery Signals Measurement Timing Configuration (DMTC) window configured by the network device for the terminal after obtaining a right to use the channel through LBT detection.

Common channels and signals in the NR system, such as synchronization signals and broadcast channels, need to cover a whole cell through a multi-beam scanning, which is convenient for the terminals in the cell to receive. Multi-beam transmission of a synchronization signal (SS) is implemented by defining a synchronization signal burst set (SS burst set). A SS burst set contains one or more SS bursts, and a SS burst contains one or more synchronization signal blocks (SS blocks). A SS block is used for carrying synchronization signals and broadcast channels of a beam. Therefore, a SS burst set may contain synchronization signals of beams whose quantity is SS block number within the cell. As shown in FIG. 1B, one SS block (SSB) contains a PSS of a symbol, a SSS of a symbol, and a Physical broadcast channel (PBCH) of a new radio access technology system of two symbols, wherein OFDM represents orthogonal frequency division multiplexing in the figure. Time frequency resources occupied by the PBCH contain a demodulation reference signal (DMRS) for the demodulation of the PBCH.

In the NR-unlicensed system, it also needs to define the DRS for the measurement of the cells on the unlicensed spectrum. The DRS in the NR-unlicensed system may include the SS block, also may only include the PSS and the SSS, and may also include the PSS, the SSS, and the DMRS for PBCH.

For a radio spectrum in the NR, a frequency domain position of the SSB is defined by a synchronization raster. As shown in Table 1, in different frequency ranges, possible frequency domain positions of the SSB are determined by a formula in the table and numbered by SSREF.

**Table 1: Global Synchronization Channel Number (GSCN) Parameters for the global frequency raster**

| Frequency range | SS_Block frequency position | Range of SSREF |
|---|---|---|
| 0 - 2650 MHz | N^{∗}900kHz+ M^{∗}5kHz, N=1:[2944], M=-1:1 | 1 - [8832] |
| 2400-24250 MHz | 2400MHz+N^{∗}1.44MHz,N= 0:[15173] | [8833-24006] |

After the synchronization raster is determined, the resource mapping of the SSB is determined according to Table 2. That is, the synchronization raster is located in a resource element (RE) with number 0 in a physical resource block (PRB) with PRB number 10 among 20 PRBs of the SSB.

**Table 2: Synchroniztion Raster to SS block Resource Element Mapping**

| Resource element index *k* | 0. |
|---|---|
| Physical resource block number *n*_{PRB} of the SS block | *n*_{PRB} = 10 |

For the synchronization raster, under different bands, the distribution of the synchronization raster within a band is determined by Table 3. For example, for band n77, the number range of the synchronization raster is 9460-10079, 620 synchronization rasters in total.

**Table 3: Applicable SS raster entries per operating band**

| NR Operating Band | SS Block SCS | Range of GSCN (First - <Step size> - Last) |
|---|---|---|
| n1 | 15kHz | 7033 - <1>- 7224 |
| n2 | 15kHz | 6433 - <1> - 6624 |
| n3 | 15kHz | 6016 - <1> - 6258 |
| n5 | 15kHz | 2896 - <1> - 2973 |
| | 30kHz | 2911 - <1> - 2961 |
| n7 | 15kHz | 8734 - <1> - 8958 |
| n8 | 15kHz | 3082 - <1> - 3192 |
| n20 | 15kHz | 2635 - <1> - 2730 |
| n28 | 15kHz | 2527 - <1> - 2670 |
| n38 | 15kHz | 8566 - <1> - 8724 |
| n41 | 15kHz | 8899 - <1> - 9030 |
| n50 | 15kHz | 4774 - <1> - 5049 |
| n51 | 15kHz | 4756 - <1> - 4764 |
| n66 | 15kHz | 7033 - <1> - 7326 |
| | 30kHz | 7048 - <1> - 7317 |
| n70 | 15kHz | 6649 - <1> - 6726 |
| n71 | 15kHz | 2056 - <1> - 2166 |
| n74 | 15kHz | 4915 - <1> - 5052 |
| n75 | 15kHz | 4774 - <1> - 5049 |
| n76 | 15kHz | 4756 - <1>- 4764 |
| n77 | 30kHz | 9460 - <1> - 10079 |
| n78 | 30kHz | 9460 - <1> - 9801 |
| n79 | 30kHz | 10245 - <1> - 10613 |

In the LAA-LTE system, the transmission of a downlink channel includes a CRS distributed over a full bandwidth, so there is no problem of a channel bandwidth occupation proportion. However, in the NR-unlicensed technology, signals transmitted on an unlicensed spectrum channel also need to satisfy that at least a certain proportion of the channel bandwidth is occupied. When the network device transmits the DRS separately, for example, transmits the SSB separately, since a bandwidth of the SSB is 20 PRBs, and a carrier bandwidth of the unlicensed spectrum currently used in the LAA system is 20MHz, multiple 20MHz may be bundled through carrier aggregation for use. In a communication system supporting the NR-unlicensed technology, an available bandwidth in a high frequency band is larger, and a bandwidth of a corresponding unlicensed spectrum is also larger. No matter for the carrier bandwidth of 20MHz or more, the SSB of 20 PRBs occupies only a small part of the carrier bandwidth. Since there is no signal that is always distributed over the full bandwidth, when the network device sends the DRS such as SSB separately, it may not meet a requirement of a proportion of the signal transmitted on the unlicensed spectrum channel occupying the carrier channel.

To address above problem, embodiments of present application provide following embodiments, which will be described in detail below with reference to the accompanying drawings.

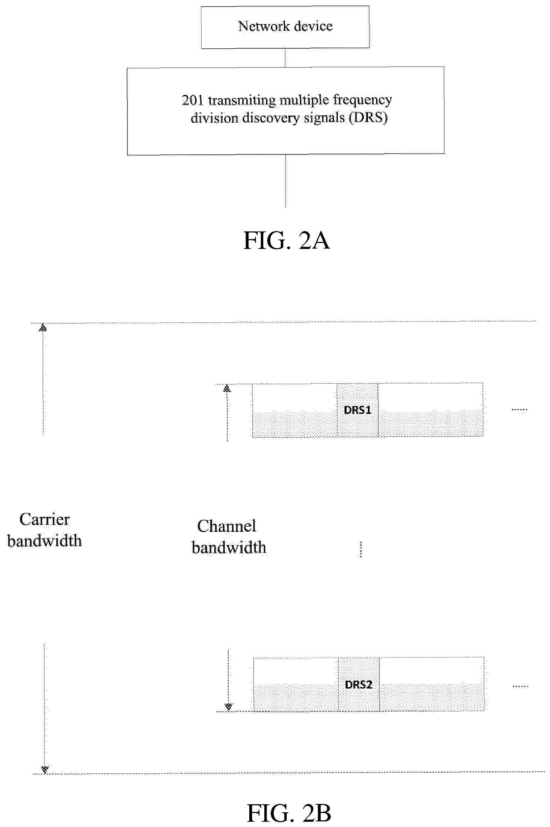

Referring to FIG. 2A, FIG. 2A is a channel transmission method provided by the embodiment of the present application. The method is applied to above exemplary communication system, and includes:
part 201, transmitting, by a network device, multiple frequency division DRS, wherein a maximum channel bandwidth determined by frequency domain positions of the multiple frequency division DRSs is greater than or equal to a reference bandwidth.

The DRS is used for a terminal to discover and/or measure cells under the jurisdiction of a base station.

Optionally, the maximum channel bandwidth is determined by a maximum frequency domain distance of frequency domain distances of any two DRS in the multiple frequency division DRSs. For example, assuming that the multiple frequency division DRSs include 3 DRSs, a frequency domain position corresponding to DRS1 is 5MHz, a frequency domain position of DRS2 is 8MHz, and a frequency domain position of DRS3 is 14MHz, the maximum channel bandwidth is determined by 9MHz.

Optionally, the reference bandwidth is less than or equal to a carrier bandwidth of a preset carrier, wherein the frequency domain positions of the multiple DRSs are within a bandwidth range corresponding to the carrier bandwidth, and the preset carrier includes an unlicensed carrier.

The carrier bandwidth may be a carrier bandwidth of a single carrier or a carrier bandwidth of an aggregated carrier after aggregation of multiple carriers. For example, if the carrier bandwidth of the single carrier is 20MHz, the carrier bandwidth of the preset carrier may be 20MHz, 40MHz (aggregation of two carriers), 80 MHz (aggregation of 4 carriers), etc.

For example, assuming that the carrier bandwidth of a currently preset carrier is 20MHz, above reference bandwidth needs to be greater than a bandwidth that may at least meet a requirement of power spectral density of a transmitted signal (since under a same power spectral density requirement, the larger the channel bandwidth is, the greater signal transmission power may be, thus it is beneficial to improve signal transmission instructions), for example, it may be 14MHz, 15MHz, 16MHz, 17MHz, 18MHz, 19MHz, and 20MHz, etc., which are not limited uniquely here.

Optionally, a ratio of the reference bandwidth to the carrier bandwidth of the preset carrier is greater than 0 and less than or equal to 1, wherein the frequency domain positions of the multiple DRSs are within a bandwidth range corresponding to the carrier bandwidth, and the preset carrier includes the unlicensed carrier.

The ratio of the reference bandwidth to the carrier bandwidth of the preset carrier needs to be greater than a ratio that may at least meet a requirement of power spectral density of the transmitted signal (since under a same power spectral density requirement, the larger the channel bandwidth is, the larger the signal transmission power may be, thus it is beneficial to improve the signal transmission instructions), for example, it may be 60%, 70%, 72%, 75%, 80% and other relatively high ratios, and there is no unique limitation here.

In a specific implementation, the correlation relationship between the frequency domain positions of the above multiple frequency division DRSs and the preset carrier may be determined by a preset mapping relationship, wherein a specific form of the mapping relationship may be a list or a formula, which is not limited uniquely here.

When the specific form of the mapping relationship is the list, different combinations of the frequency domain positions of the multiple DRSs may be identified by different transmission patterns, wherein one preset carrier may correspond to one or more transmission patterns, and specific policies for the network device to select a target transmission pattern from one or more transmission patterns corresponding to the current preset carrier may be various and are not limited uniquely here.

When the specific form of the mapping relation is the formula, the network device may determine the frequency domain positions of the multiple DRSs only through the formula and input parameters, wherein the input parameters may at least include frequency domain characteristic parameters of the current preset carrier.

In a specific implementation, before the network device sends multiple frequency division DRS, the method further includes:
performing, by the network device, a clear channel assessment (CCA) detection on the channel of the preset carrier in a preset period, wherein the preset period is before a DRS transmission time window, and the preset carrier includes an unlicensed carrier; and detecting, by the network device, that state of the channel of the preset carrier is an idle state. The duration of the preset period may be transmission time of 1 SSB.

Optionally, each DRS includes 1 SSB; or, each DRS includes the PSS and the SSS; or, each DRS includes the PSS, the SSS, and the DMRS for the PBCH.

Optionally, the multiple frequency division DRSs correspond to multiple frequency division SSBs; wherein indexes of the multiple frequency division SSBs are same, and cell identifiers corresponding to the multiple frequency division SSBs are same. The multiple frequency division SSBs are transmitted at the same time and have a quasi-co-location (QCL) relationship and the same index, thus facilitating the synchronization of the terminals.

Optionally, the multiple frequency division DRSs are associated with a same cell, and there is the QCL relationship between any two frequency division DRSs. Since the synchronization signal block DRS is transmitted in a multi-beam scanning mode and different beams are transmitted in a time division mode, the DRSs transmitted at the same time and at different frequencies may be transmitted in a same beam, which may improve the gain of beam shaping and reduce the complexity of beam shaping transmission of the base station.

In addition, a specific implementation process of determining the frequency domain positions of the multiple frequency division DRSs by the target channel bandwidth may be: obtaining the target channel bandwidth, determining a minimum quantity of DRS required by the target channel bandwidth to meet a preset bandwidth occupation requirement, and determining the frequency domain position of each DRS. Specifically, as shown in FIG. 2B, assuming that the network device determines that the target channel bandwidth satisfying the bandwidth occupation requirement is in the carrier bandwidth of the preset carrier, the network device may further determine at least two DRSs corresponding to the target channel bandwidth, such as DRS1 and DRS2. A frequency domain position of the DRS1 corresponds to a high frequency position of the target channel bandwidth, and a frequency domain position of the DRS2 corresponds to a low frequency position of the target channel bandwidth.

For example, assuming that the carrier bandwidth of the preset carrier is 20MHz, the preset bandwidth occupation requirement is that the channel bandwidth is greater than 10MHz, and the determined target channel bandwidth is 14MHz, then the network device may determine 2 frequency division DRSs, specifically the DRS1 and the DRS2, and the frequency domain position of the DRS1 is 4MHz, and the frequency domain position of the DRS2 is 18MHz.

It may be seen, in the embodiment of the present application, the network device transmits multiple frequency division DRSs, and a maximum channel bandwidth determined by the frequency domain positions of the multiple frequency division DRSs is greater than or equal to the reference bandwidth. Since the reference bandwidth may meet the power spectral density requirement of signals transmitted on the unlicensed spectrum, under the same power spectral density requirement, the larger the current maximum channel bandwidth is, the higher the corresponding signal transmission power is, thus it is beneficial to improving the quality of signal transmission between the network device and the terminal on the unlicensed spectrum.

In one possible example, the multiple frequency division DRSs correspond to multiple frequency division SSBs; the frequency domain positions of the multiple frequency division SSBs are determined by a position of a synchronization raster of the carrier bandwidth of the preset carrier, and the preset carrier includes the unlicensed carrier.

The synchronization raster is a minimum unit for adjusting the carrier frequency position, indicating that an interval between various frequency points should be an integer multiple of 100KHz, which is equivalent to dividing a highway into several lanes, and center distance between two lanes is the integer multiple of 100KHz. The terminal is scanned by the integer multiple of 100KHz during frequency scanning.

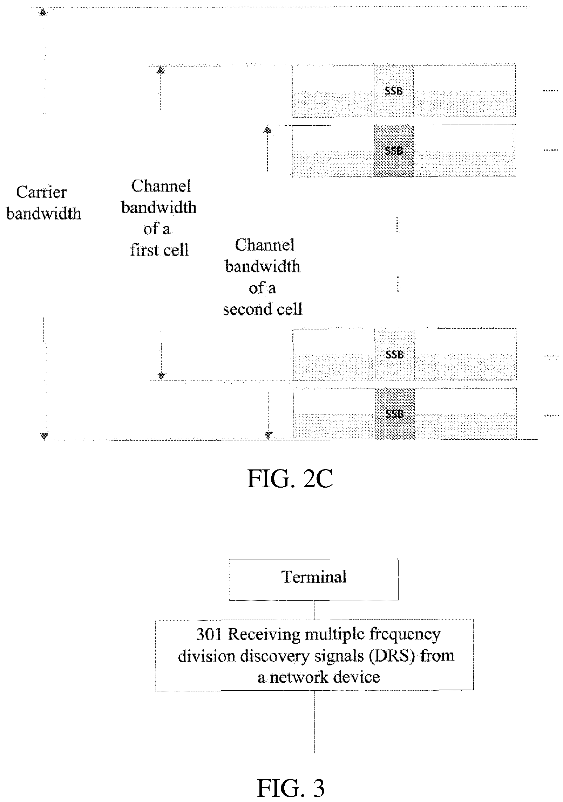

As shown in FIG. 2C, frequency domain positions of SSBs of different cells may be interleaved with each other, thus reducing mutual interference. In this configuration, since the frequency domain positions of the SSBs of the different cells are different, the mutual interference between them may be avoided or reduced.

For example, assuming that the preset carrier is the unlicensed carrier, the channel bandwidth of the unlicensed carrier is 14.4MHz, and the synchronization raster of the channel bandwidth includes 11 synchronization rasters, raster1, raster2, raster3, raster4, raster5, raster6, raster7, raster8, raster9, raster10 and raster11 respectively. The frequency domain distance between any two rasters is an integer multiple of 1.44MHz, i.e. the frequency domain position of each synchronization raster is shown in Table 1. And the position of the synchronization raster is the frequency domain position of the SSB, that is, the frequency domain position of the SSB corresponds to any one of the 11 synchronization rasters. The target channel bandwidth is determined to be 8MHz, and specifically corresponds to 20.00MHz to 28.00MHz. Then the network device may determine a first synchronization raster1 (24MHz) and a second synchronization raster7 (40MHz) containing the channel bandwidth, and finally determine to send a first SSB and a second SSB at the position of raster1 and the position of raster7.

**Table 1**

| Synchronization raster | Frequency domain position |
|---|---|
| raster1 | 20.00MHz |
| raster2 | 21.44MHz |
| raster3 | 22.88 MHz |
| raster4 | 24.32MHz |
| raster5 | 25.76 MHz |
| raster6 | 27.20 MHz |
| raster7 | 28.64MHz |
| raster8 | 30.08 MHz |
| raster9 | 31.52 MHz |
| raster10 | 32.96 MHz |
| raster11 | 34.40 MHz |

It may be seen, in this example, the frequency domain position of the SSB may be accurately indicated through the synchronization raster, thus facilitating both communication parties to determine, through looking up the table quickly, the target channel bandwidth determined by the multiple frequency division SSBs currently transmitted, and improving an indication efficiency of the target channel bandwidth in the communication system.

In one possible example, the position of the synchronization raster is determined by the cell identifier.

The positions of all synchronization rasters are predefined in the frequency domain used by the whole NR system, and for a cell adopting a certain carrier bandwidth, predefined positions of multiple synchronization rasters exist in a frequency domain range of its carrier. For two co-frequency cells, although their predefined positions of the synchronization raster overlap, since identifiers of different cells are different, the synchronization rasters corresponding to multiple frequency division SSBs are different in different cells.

It may be seen, in this example, since the identifiers of different cells are different, and the positions of synchronization rasters determined by different cell identifiers are also different, the frequency domain positions of the multiple SSBs in different cells are different, thus avoiding or reducing mutual interference between them.

In one possible example, the position of the synchronization raster is configured by a system message or radio resource control (RRC) signaling.

The system message may be, for example, Remaining Minimum System Information (RMSI) or Other System Information (OSI). The configuration of the RRC signaling may be, for example, a RRC connection establishment request, a RRC reconfiguration signaling, etc.

It may be seen, in this example, the position of synchronization raster may flexibly configure the transmission frequency domain position of the SSB through the system message or the RRC signaling, which is helpful for effective use of frequency domain resources and reduction of adjacent cell interference.

In one possible example, the multiple frequency division DRSs correspond to multiple frequency division SSBs; and the frequency domain positions of the multiple frequency division SSBs are transmitted on the frequency domain positions associated with an asynchronization raster of the carrier bandwidth of the preset carrier, wherein the preset carrier includes the unlicensed carrier.

The asynchronization raster refers to a frequency position other than the predefined frequency position of the synchronization raster within the carrier bandwidth. The frequency domain positions of the multiple frequency division SSBs are transmitted on the frequency domain positions associated with the asynchronization raster of the carrier bandwidth of the preset carrier, and the frequency domain positions of the SSBs do not have a fixed association relationship with the synchronization raster.

It may be seen, in this example, the frequency domain position of the SSB is transmitted at the frequency domain position associated with the asynchronization raster, so that the frequency domain position of the SSB may be configured more flexibly, and there is no need to perform transmission only at the position determined by the synchronization raster, which contributes to the effective use of frequency domain resources.

Consistent with the embodiment shown in FIG. 2A, refer to FIG. 3. FIG. 3 illustrates another channel transmission method provided by an embodiment of the present application. The method is applied to the above exemplary communication system, and includes:
part 301, receiving, by a terminal, multiple frequency division DRSs from a network device, wherein a maximum channel bandwidth determined by frequency domain positions of the multiple frequency division DRSs is greater than or equal to a reference bandwidth.

It may be seen, in the embodiment of the present application, the terminal receives multiple frequency division DRSs, and the maximum channel bandwidth determined by the frequency domain positions of the multiple frequency division DRSs is greater than or equal to the reference bandwidth. Since the reference bandwidth may meet a power spectral density requirement of signals transmitted on an unlicensed spectrum, under a same power spectral density requirement, the larger a current maximum channel bandwidth is, the higher the corresponding signal transmission power is, thus it is beneficial to improving the quality of signal transmission between network device and the terminal on the unlicensed spectrum.

In one possible example, the maximum channel bandwidth is determined by a maximum frequency domain distance of frequency domain distances of any two DRSs in the multiple frequency division DRSs.

In one possible example, the reference bandwidth is less than or equal to a carrier bandwidth of a preset carrier, wherein the frequency domain positions of the multiple DRSs are within a bandwidth range corresponding to the carrier bandwidth, and the preset carrier includes the unlicensed carrier.

In one possible example, a ratio of the reference bandwidth to the carrier bandwidth of the preset carrier is greater than 0 and less than or equal to 1, wherein the frequency domain positions of the multiple DRSs are within the bandwidth range corresponding to the carrier bandwidth, and the preset carrier includes the unlicensed carrier.

In one possible example, each DRS includes 1 SSB; or, each DRS includes a PSS and a SSS; or, each DRS includes the PSS, the SSS, and a DMRS for PBCH.

In one possible example, the multiple frequency division DRSs correspond to multiple frequency division SSBs; wherein the frequency domain positions of the multiple frequency division SSBs are determined by a position of a synchronization raster of the carrier bandwidth of the preset carrier, and the preset carrier includes the unlicensed carrier.

In one possible example, the position of the synchronization raster is determined by a cell identifier.

In one possible example, the position of the synchronization raster is configured by a system message or RRC signaling.

In one possible example, the multiple frequency division DRSs correspond to multiple frequency division SSBs; the frequency domain positions of the multiple frequency division SSBs are transmitted on a frequency domain position associated with an asynchronization raster of the carrier bandwidth of the preset carrier, and the preset carrier includes the unlicensed carrier.

In one possible example, the multiple frequency division DRSs correspond to multiple frequency division SSBs; indexes of the multiple frequency division SSBs are same, and cell identifiers corresponding to the multiple frequency division SSBs are same.

In one possible example, the multiple frequency division DRSs are associated with a same cell, and there is a QCL relationship between any two frequency division DRSs.

In one possible example, the multiple frequency division DRSs are sent by the network device after the CCA detection is performed on a channel of the preset carrier within a preset period and the state of the channel of the preset carrier is detected as an idle state, and the preset period is before a DRS transmission time window, and the preset carrier includes the unlicensed carrier.

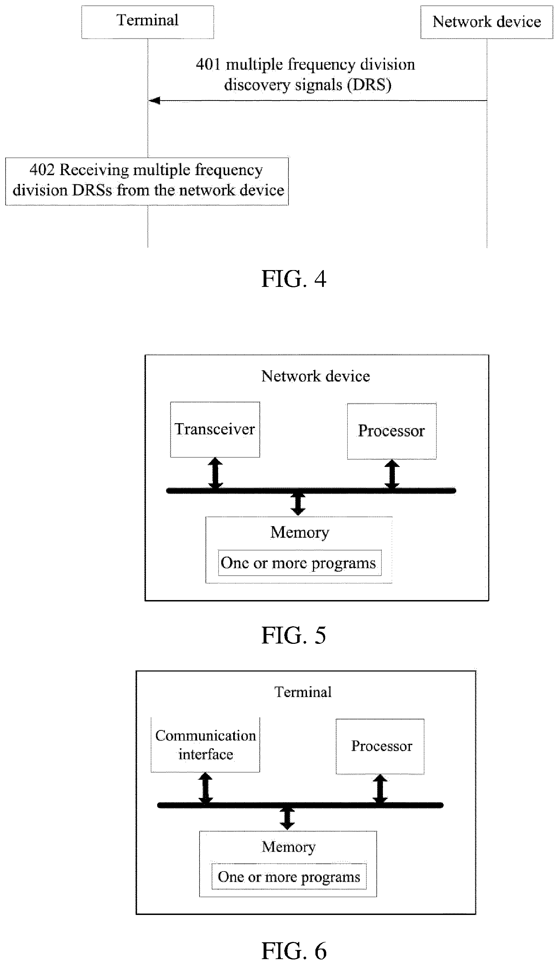

Consistent with the embodiment shown in FIG. 2A and FIG.3, refer to FIG. 4. FIG. 4 is a channel transmission method provided by an embodiment of the present application. The method is applied to the above exemplary communication system, and includes parts 401-402.

In part 401, transmitting, by a network device, multiple frequency division DRSs, wherein a maximum channel bandwidth determined by frequency domain positions of the multiple frequency division DRSs is greater than or equal to a reference bandwidth.

In part 402, the terminal receives multiple frequency division DRSs from the network device, wherein the maximum channel bandwidth determined by the frequency domain positions of the multiple frequency division DRSs is greater than or equal to the reference bandwidth.

It may be seen, in the embodiment of the present application, the network device transmits multiple frequency division DRSs, wherein the maximum channel bandwidth determined by the frequency domain positions of the multiple frequency division DRSs is greater than or equal to the reference bandwidth. Since the reference bandwidth may meet a power spectral density requirement of signals transmitted on an unlicensed spectrum, under a same power spectral density requirement, the larger a current maximum channel bandwidth is, the higher the corresponding signal transmission power is, thus it is beneficial to improving the quality of signal transmission between the network device and the terminal on the unlicensed spectrum.

Consistent with the above embodiment, refer to FIG. 5. FIG. 5 is a schematic structural diagram of a network device provided by an embodiment of the present invention, and the network device is a first network device. As shown in the figure, the network device includes: a processor, a memory, a transceiver, and one or more programs, wherein the one or more programs are stored in the memory and configured to be executed by the processor, and the program includes instructions for performing following acts:
sending multiple frequency division DRSs, wherein a maximum channel bandwidth determined by frequency domain positions of the multiple frequency division DRSs is greater than or equal to a reference bandwidth.

It may be seen, in the embodiment of the present application, the network device transmits multiple frequency division DRSs, wherein the maximum channel bandwidth determined by the frequency domain positions of the multiple frequency division DRSs is greater than or equal to the reference bandwidth. Since the reference bandwidth may meet a power spectral density requirement of signals transmitted on an unlicensed spectrum, under a same power spectral density requirement, the larger a current maximum channel bandwidth is, the higher the corresponding signal transmission power is, thus it is beneficial to improving the quality of signal transmission between the network device and the terminal on the unlicensed spectrum.

In one possible example, the maximum channel bandwidth is determined by a maximum frequency domain distance of frequency domain distances of any two DRSs in the multiple frequency division DRSs.

In one possible example, the reference bandwidth is less than or equal to a carrier bandwidth of a preset carrier, and the frequency domain positions of the multiple DRSs are within a bandwidth range corresponding to the carrier bandwidth, and the preset carrier includes the unlicensed carrier.

In one possible example, a ratio of the reference bandwidth to the carrier bandwidth of the preset carrier is greater than 0 and less than or equal to 1, and the frequency domain positions of the multiple DRSs are within the bandwidth range corresponding to the carrier bandwidth, and the preset carrier includes the unlicensed carrier.

In one possible example, each DRS includes 1 SSB; or, each DRS includes a PSS and a SSS; or, each DRS includes the PSS, the SSS, and a DMRS for PBCH.

In one possible example, the multiple frequency division DRSs correspond to multiple frequency division SSBs; the frequency domain positions of the multiple frequency division SSBs are determined by a position of a synchronization raster of the carrier bandwidth of a preset carrier, and the preset carrier includes the unlicensed carrier.

In one possible example, a position of a synchronization raster is determined by a cell identifier.

In one possible example, the position of the synchronization raster is configured by a system message or RRC signaling.

In one possible example, the multiple frequency division DRSs correspond to multiple frequency division SSBs; the frequency domain positions of the multiple frequency division SSBs are transmitted on a frequency domain position associated with an asynchronization raster of the carrier bandwidth of the preset carrier, and the preset carrier includes the unlicensed carrier.

In one possible example, the multiple frequency division DRSs correspond to multiple frequency division SSBs; indexes of the multiple frequency division SSBs are same, and cell identifiers corresponding to the multiple frequency division SSBs are same.

In one possible example, the multiple frequency division DRSs are associated with a same cell, and there is a QCL relationship between any two frequency division DRSs.

In one possible example, the program further includes instructions for performing following operations: before the multiple frequency division DRSs are transmitted, the CCA detection is performed on a channel of the preset carrier during a preset period, and the preset period is before a DRS transmission time window, and the preset carrier includes the unlicensed carrier; and the state of the channel of the preset carrier is detected to be an idle state.

Consistent with the above embodiment, refer to FIG.6. FIG. 6 is a schematic structural diagram of a terminal provided by an embodiment of the present invention. As shown in FIG. 6, the terminal includes: a processor, a memory, a communication interface, and one or more programs, wherein the one or more programs are stored in the memory and configured to be executed by the processor, and the program includes instructions for performing the following acts:
receiving multiple frequency division DRSs from network device, wherein a maximum channel bandwidth determined by frequency domain positions of the multiple frequency division DRSs is greater than or equal to a reference bandwidth.

It may be seen, in the embodiment of the present application, the terminal receives multiple frequency division DRS, wherein the maximum channel bandwidth determined by the frequency domain positions of the multiple frequency division DRSs is greater than or equal to the reference bandwidth. Since the reference bandwidth may meet a power spectral density requirement of signals transmitted on an unlicensed spectrum, under a same power spectral density requirement, the larger a current maximum channel bandwidth is, the higher the corresponding signal transmission power is, thus it is beneficial to improving the quality of signal transmission between the network device and the terminal on the unlicensed spectrum.

In one possible example, the maximum channel bandwidth is determined by a maximum frequency domain distance of frequency domain distances of any two DRSs in the multiple frequency division DRSs.

In one possible example, the reference bandwidth is less than or equal to a carrier bandwidth of a preset carrier, and the frequency domain positions of the multiple DRSs are within a bandwidth range corresponding to the carrier bandwidth, and the preset carrier includes the unlicensed carrier.

In one possible example, a ratio of the reference bandwidth to the carrier bandwidth of the preset carrier is greater than 0 and less than or equal to 1, wherein the frequency domain positions of the multiple DRSs are within the bandwidth range corresponding to the carrier bandwidth, and the preset carrier includes the unlicensed carrier.

In one possible example, each DRS includes 1 SSB; or, each DRS includes a PSS and a SSS; or, each DRS includes the PSS, the SSS, and DMRS for PBCH.

In one possible example, the multiple frequency division DRSs correspond to multiple frequency division SSBs; wherein the frequency domain positions of the multiple frequency division SSBs are determined by a position of a synchronization raster of the carrier bandwidth of the preset carrier, and the preset carrier includes the unlicensed carrier.

In one possible example, the position of the synchronization raster is determined by a cell identifier.

In one possible example, the position of the synchronization raster is configured by a system message or RRC signaling.

In one possible example, the multiple frequency division DRSs correspond to multiple frequency division SSBs; the frequency domain positions of the multiple frequency division SSBs are transmitted on a frequency domain position associated with an asynchronization raster of the carrier bandwidth of the preset carrier, and the preset carrier comprises the unlicensed carrier.

In one possible example, the multiple frequency division DRSs correspond to multiple frequency division SSBs; indexes of the multiple frequency division SSBs are same, and cell identifiers corresponding to the multiple frequency division SSBs are same.

In one possible example, the multiple frequency division DRSs are associated with a same cell, and there is a quasi-co-location QCL relationship between any two frequency division DRSs.

In one possible example, the multiple frequency division DRSs are sent by the network device after the CCA detection is performed on the channel of the preset carrier within a preset period and the state of the channel of the preset carrier is detected to be an idle state, and the preset period is before a DRS transmission time window, and the preset carrier includes the unlicensed carrier.

Above describes solutions of the embodiments of the present application mainly from a perspective of interaction between various network elements. It may be understood that the terminal and the network device include corresponding hardware structures and/or software modules for performing various functions, so as to implement the above functions. A person skilled in the art should easily understand that, in combination with units and algorithm acts in examples described with reference to the embodiments disclosed herein, the present application may be implemented by hardware or a combination of hardware and computer software. Whether a function is performed by hardware or computer software driving hardware depends on a particular application and a design constraint condition of the technical solution. A person skilled in the art may use different methods to implement the described functions for each particular application, but it should not be considered that such an implementation goes beyond scope of the present application.

Division for functional units may be performed for the terminal and network device in the embodiments of the present application according to the above method examples. For example, various functional units may be divided according to various functions, or two or more functions may be integrated into one processing unit. The aforementioned integrated unit may be implemented in a form of hardware, or may be implemented in a form of a software program module. It should be noted that, the division of the units in the embodiments of the present application is illustrative, and is merely the division of logical functions. Other divisional modes may be used in actual implementations.

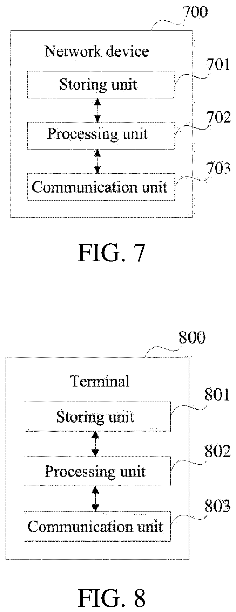

In a case that an integrated unit is used, FIG. 7 illustrates a block diagram of possible composition of functional units of a network device related to the above embodiments. The network device is a first network device. A network device 700 includes a processing unit 702 and a communication unit 703. The processing unit 702 is configured to control and manage actions of a terminal. For example, the processing unit 702 is configured to support the network device to perform act 201 in FIG. 2A, act 401 in FIG. 4, and/or other processes of the techniques described in this description. The communication unit 703 is configured to support the communication between the network device and other devices, such as the communication between the terminal and the network device as shown in FIG. 6. The network device further includes a storing unit 701 configured to store program codes and data of the network device.

The processing unit 702 may be a processor or a controller, and the communication unit 703 may be a transceiver, a transceiving circuit, or a radio frequency chip etc., and the storing unit 701 may be a memory.

The processing unit 702 is configured to transmit multiple frequency division DRSs through the communication unit 703, wherein a maximum channel bandwidth determined by frequency domain positions of the multiple frequency division DRSs is greater than or equal to a reference bandwidth.

In one possible example, the maximum channel bandwidth is determined by a maximum frequency domain distance of frequency domain distances of any two DRSs in the multiple frequency division DRSs.

In one possible example, the reference bandwidth is less than or equal to a carrier bandwidth of a preset carrier, the frequency domain positions of the multiple DRSs are within a bandwidth range corresponding to the carrier bandwidth, and the preset carrier includes an unlicensed carrier.

In one possible example, a ratio of the reference bandwidth to the carrier bandwidth of the preset carrier is greater than 0 and less than or equal to 1,and the frequency domain positions of the multiple DRSs are within the bandwidth range corresponding to the carrier bandwidth, and the preset carrier includes the unlicensed carrier.

In one possible example, each DRS includes 1 SSB; or, each DRS includes a PSS and a SSS; or, each DRS includes the PSS, the SSS, and DMRS for PBCH.

In one possible example, the multiple frequency division DRSs correspond to multiple frequency division SSBs; wherein the frequency domain positions of the multiple frequency division SSBs are determined by a position of a synchronization raster of the carrier bandwidth of the preset carrier, and the preset carrier comprises the unlicensed carrier.

In one possible example, the position of the synchronization raster is determined by a cell identifier.

In one possible example, the position of the synchronization raster is configured by a system message or RRC signaling.

In one possible example, the multiple frequency division DRSs correspond to multiple frequency division SSB; wherein the frequency domain positions of the multiple frequency division SSBs are transmitted on a frequency domain position associated with an asynchronization raster of the carrier bandwidth of the preset carrier, and the preset carrier includes the unlicensed carrier.

In one possible example, the multiple frequency division DRSs correspond to multiple frequency division SSBs; indexes of the multiple frequency division SSBs are same, and cell identifiers corresponding to the multiple frequency division SSBs are same.

In one possible example, the multiple frequency division DRSs are associated with a same cell, and there is a QCL relationship between two frequency division DRSs.

In one possible example, before the communication unit 703 transmits the multiple frequency division DRSs, the processing unit 701 is further configured to: perform a CCA detection on a channel of the preset carrier within a preset period, wherein the preset period is before a DRS transmission time window, and the preset carrier includes the unlicensed carrier; and configured to detect the state of the channel of the preset carrier as an idle state.

When the processing unit 702 is a processor, the communication unit 703 is a communication interface, and the storing unit 701 is a memory, the network device relating to the embodiment of the present application may be the network device shown in FIG. 5.

In the case that an integrated unit is used, FIG. 8 illustrates a block diagram of possible composition of possible functional units of a terminal related to the above embodiments. A terminal 800 includes a processing unit 802 and a communication unit 803. The processing unit 802 is configured to control and manage actions of the terminal. For example, the processing unit 802 is configured to support the terminal to execute act 301 in FIG. 3, act 402 in FIG. 4, and/or other processes for the techniques described in this description. The communication unit 803 is configured to support the communication between the terminal and other devices, such as the communication between the terminal and a network device as illustrated in FIG. 5. The terminal may further include a storing unit 801, configured to store program codes and data of the terminal.

The processing unit 802 may be a processor or a controller such as a Central Processing Unit (CPU), a general purpose processor, a Digital Signal Processor (DSP), an Application-Specific Integrated Circuit (ASIC), a Field Programmable Gate Array (FPGA), or other programmable logic device, transistor logic device, hardware component, or any combination thereof. The processing unit 802 may implement or execute various illustrative logical blocks, modules, and circuits described in combination with disclosed contents of the present application. The processor may also be a combination for implementing computing functions, e.g., a combination including one or more microprocessors, a combination of the DSP and a microprocessor, etc. The communication unit 803 may be a transceiver or a transceiving circuit, etc. The storing unit 801 may be a memory.

The processing unit 802 is configured to receive multiple frequency division DRSs from the network device through the communication unit, and a maximum channel bandwidth determined by frequency domain positions of the multiple frequency division DRSs is greater than or equal to a reference bandwidth.

In one possible example, the maximum channel bandwidth is determined by a maximum frequency domain distance of frequency domain distances of any two DRSs in the multiple frequency division DRSs.

In one possible example, the reference bandwidth is less than or equal to a carrier bandwidth of a preset carrier, and the frequency domain positions of the multiple DRSs are within a bandwidth range corresponding to the carrier bandwidth, and the preset carrier includes an unlicensed carrier.

In one possible example, a ratio of the reference bandwidth to the carrier bandwidth of the preset carrier is greater than 0 and less than or equal to 1, and the frequency domain positions of the multiple DRSs are within the bandwidth range corresponding to the carrier bandwidth, and the preset carrier includes the unlicensed carrier.

In one possible example, each DRS includes 1 SSB; or, each DRS includes a PSS and a SSS; or, each DRS includes the PSS, the SSS, and DMRS for PBCH.

In one possible example, the multiple frequency division DRSs correspond to multiple frequency division SSBs; frequency domain positions of the multiple frequency division SSBs are determined by a position of a synchronization raster of the carrier bandwidth of the preset carrier, and the preset carrier includes the unlicensed carrier.

In one possible example, the position of the synchronization raster is determined by a cell identifier.

In one possible example, the position of the synchronization raster is configured by a system message or RRC signaling.

In one possible example, the multiple frequency division DRSs correspond to multiple frequency division SSBs; frequency domain positions of the multiple frequency division SSBs are transmitted on a frequency domain position associated with an asynchronization raster of the carrier bandwidth of the preset carrier, and the preset carrier includes the unlicensed carrier.

In one possible example, the multiple frequency division DRSs correspond to multiple frequency division SSBs; indexes of the multiple frequency division SSBs are same, and cell identifiers corresponding to the multiple frequency division SSBs are same.

In one possible example, the multiple frequency division DRSs are associated with a same cell, and there is a QCL relationship between any two frequency division DRSs.

In one possible example, the multiple frequency division DRSs are sent by the network device after a CCA detection is performed on a channel of the preset carrier within a preset period and a state of the channel of the preset carrier is detected as an idle state, and the preset period is before a DRS transmission time window, and the preset carrier includes the unlicensed carrier.

When the processing unit 802 is a processor, the communication unit 803 is a communications interface, and the storing unit 801 is a memory, the terminal relating to the embodiment of the present application may be the terminal shown in FIG. 6.

A computer readable storage medium is also provided in an embodiment of the present application. The computer readable storage medium stores a computer program for electronic data interchange, wherein the computer program causes a computer to execute a part or all of the acts described for the terminal in the above method embodiments.

A computer readable storage medium is also provided in an embodiment of the present application. The computer readable storage medium stores a computer program for electronic data interchange, wherein the computer program causes a computer to execute a part or all of the acts described for the network device in the above method embodiments.

A computer program product is also provided in an embodiment of the present application, wherein the computer program product includes a non-transitory computer readable storage medium storing a computer program, and the computer program is operable to cause a computer to execute a part or all of the acts described for the terminal in the above method embodiments. The computer program product may be a software installation package.

A computer program product is also provided by an embodiment of the present application, wherein, the computer program product includes a non-transitory computer readable storage medium storing a computer program, and the computer program is operable to casue a computer to execute a part or all of the acts described for the network device in the above method. The computer program product may be a software installation package.

The acts of the method or algorithm described in the embodiments of the present application may be implemented in hardware or may be implemented by a processor executing software instructions. The software instructions may be composed of corresponding software modules. The software modules may be stored in a Random Access Memory (RAM), a flash memory, a Read Only Memory (ROM), an Erasable Programmable Read Only Memory (EPROM), an Electrically Erasable Programmable Read Only Memory (EEPROM), a register, a hard disk, a removable hard disk, a Compact Disc Read-Only Memory (CD-ROM), or a storage medium in any other form well-known in the art. An exemplary storage medium is coupled to the processor, such that the processor may read information from the storage medium, and write information to the storage medium. Of course, the storage medium may also be a component of the processor. The processor and the storage medium may be located in an ASIC. In addition, the ASIC may be located in an access network device, a target network device, or a core network device. Of course, the processor and the storage medium may also act as separate components in the access network device, the target network device, or the core network device.

Those skilled in the art should realize that in one or more examples described above, the functions described in the embodiments of the present application may be implemented in whole or in parts through software, hardware, firmware, or any combination thereof. When the implemented through software, these functions may be implemented in whole or in parts in the form of a computer program product. The computer program product includes one or more computer instructions. When the computer program instructions are loaded and executed on a computer, the flows or functions according to the embodiments of the present application are generated in whole or in parts. The computer may be a general purpose computer, a special purpose computer, a computer network, or other programmable apparatuses. The computer instructions may be stored in a computer-readable storage medium, or transmitted from one computer-readable storage medium to another computer-readable storage medium, for example, the computer instructions may be transmitted from a website site, a computer, a server, or a data center to another website site, computer, server, or data center through a wired mode (e.g., a coaxial cable, an optical fiber, a Digital Subscriber Line (DSL)) or a wireless mode (e.g., infrared radiation, radio, microwave, etc.). The computer-readable storage medium may be any available medium that the computer may access, or a data storage device such as an integrated server or data center that includes one or more available media. The available medium may be a magnetic medium (e.g., a floppy disk, a hard disk, a magnetic tape), an optical medium (e.g., a Digital Video Disc (DVD)), or a semiconductor medium (e.g., a Solid State Disk (SSD)), or the like.

Based on the above specific embodiments, the purpose, technical scheme and beneficial effect of the embodiment of present application are further explained in detail. It should be understood that the above is only the specific implementations of embodiments of the present application, and is not used to limit the protection scope of embodiments of the present application. Any modification, equivalent substitution, improvement and the like, made on the basis of technical solutions of embodiments of the present application shall be included in the protection scope of embodiments of the present application.

## Claims

1. A channel transmission method, comprising:
transmitting, by a network device, a plurality of frequency division discovery signals (DRSs), wherein a maximum channel bandwidth determined by frequency domain positions of the plurality of frequency division DRSs is greater than or equal to a reference bandwidth.

2. The method of claim 1, wherein the maximum channel bandwidth is determined by a maximum frequency domain distance of frequency domain distances of any two DRSs in the plurality of frequency division DRSs.

3. The method of claim 1 or 2, wherein the reference bandwidth is less than or equal to a carrier bandwidth of a preset carrier, the frequency domain positions of the plurality of DRSs are within a bandwidth range corresponding to the carrier bandwidth, and the preset carrier comprises an unlicensed carrier.

4. The method of claim 1 or 2, wherein a ratio of the reference bandwidth to a carrier bandwidth of a preset carrier is greater than 0 and less than or equal to 1, the frequency domain positions of the plurality of DRSs are within a bandwidth range corresponding to the carrier bandwidth, and the preset carrier comprises an unlicensed carrier.

5. The method of any one of claims 1 to 4, wherein,
each DRS comprises 1 synchronization signal block (SSB); or,
each DRS comprises a primary synchronization signal (PSS) and a secondary synchronization signal (SSS); or,
each DRS comprises a PSS, a SSS, and a demodulation reference signal (DMRS) for physical broadcast channel (PBCH).

6. The method of any one of claims 1 to 5, wherein the plurality of frequency division DRSs correspond to a plurality of frequency division SSBs; frequency domain positions of the plurality of frequency division SSBs are determined by a position of a synchronization raster of a carrier bandwidth of a preset carrier, and the preset carrier comprises an unlicensed carrier.

7. The method of claim 6, wherein the position of the synchronization raster is determined by a cell identifier.

8. The method of claim 6 or 7, wherein the position of the synchronization raster is configured through a system message or radio resource control (RRC) signaling.

9. The method of any one of claims 1 to 5, wherein the plurality of frequency division DRSs corresponds to a plurality of frequency division SSBs; frequency domain positions of the plurality of frequency division SSBs are transmitted on a frequency domain position associated with an asynchronization raster of a carrier bandwidth of a preset carrier, and the preset carrier comprises an unlicensed carrier.

10. The method of any one of claims 1 to 9, wherein the plurality of frequency division DRSs correspond to a plurality of frequency division SSBs; indexes of the plurality frequency division SSBs are same, and cell identifiers corresponding to the plurality frequency division SSBs are same.

11. The method of any one of claims 1 to 10, wherein the plurality frequency division DRSs are associated with a same cell, and there is a quasi-co-location (QCL) relationship between any two frequency division DRSs.

12. The method of any one of claims 1 to 11, wherein before the network device transmits the plurality of frequency division DRSs, the method further comprises:
performing, by the network device, a clear channel assessment (CCA) detection on a channel of a preset carrier in a preset period, wherein the preset period is before a DRS transmission time window, and the preset carrier comprise an unlicensed carrier; and
detecting, by the network device, that a state of the channel of the preset carrier is an idle state.

13. A channel transmission method, comprising:
receiving, by a terminal, a plurality of frequency division discovery signals (DRSs) from a network device, wherein a maximum channel bandwidth determined by frequency domain positions of the plurality of frequency division DRSs is greater than or equal to a reference bandwidth.

14. The method of claim 13, wherein the maximum channel bandwidth is determined by a maximum frequency domain distance of frequency domain distances of any two DRSs in the plurality of frequency division DRSs.

15. The method of claim 13 or 14, wherein the reference bandwidth is less than or equal to a carrier bandwidth of a preset carrier, the frequency domain positions of the plurality of DRSs are within a bandwidth range corresponding to the carrier bandwidth, and the preset carrier comprises an unlicensed carrier.

16. The method of claim 13 or 14, wherein a ratio of the reference bandwidth to a carrier bandwidth of a preset carrier is greater than 0 and less than or equal to 1, the frequency domain positions of the plurality of DRSs are within a bandwidth range corresponding to the carrier bandwidth, and the preset carrier comprises an unlicensed carrier.

17. The method of any one of claims 13-16, wherein each DRS comprises 1 synchronization signal block (SSB); or, each DRS comprises a primary synchronization signal (PSS) and a secondary synchronization signal (SSS); or, each DRS comprises a PSS, a SSS, and a demodulation reference signal (DMRS) for physical broadcast channel (PBCH).

18. The method of any one of claims 13-17, wherein the plurality of frequency division DRSs correspond to a plurality of frequency division SSBs; frequency domain positions of the plurality of frequency division SSBs are determined by a position of a synchronization raster of a carrier bandwidth of a preset carrier, and the preset carrier comprises an unlicensed carrier.

19. The method of claim 18, wherein the position of the synchronization raster is determined by a cell identifier.

20. The method of claim 18 or 19, wherein the position of the synchronization raster is configured by a system message or radio resource control (RRC) signaling.

21. The method of any one of claims 13-17, wherein the plurality of frequency division DRSs corresponds to a plurality of frequency division SSBs; frequency domain positions of the plurality of frequency division SSBs are transmitted on a frequency domain position associated with an asynchronization raster of a carrier bandwidth of a preset carrier, and the preset carrier comprises an unlicensed carrier.

22. The method of any one of claims 13-21, wherein the plurality of frequency division DRSs corresponds to a plurality of frequency division SSBs; indexes of the plurality of frequency division SSBs are same, and cell identifiers corresponding to the plurality of frequency division SSBs are same.

23. The method of any one of claims 13-22, wherein the plurality of frequency division DRSs are associated with a same cell, and there is a quasi-co-location (QCL) relationship between any two frequency division DRSs.

24. The method of any one of claims 13-23, wherein the plurality of frequency division DRSs are transmitted after the network device performs a clear channel assessment (CCA) detection on a channel of a preset carrier within a preset period and detect that a state of the channel of the preset carrier is an idle state, wherein the preset period is before a DRS transmission time window, and the preset carrier comprises an unlicensed carrier.

25. A network device, comprising a processing unit and a communication unit, wherein the processing unit is configured to transmit a plurality of frequency division discovery signals (DRSs), wherein a maximum channel bandwidth determined by frequency domain positions of the plurality of frequency division DRSs is greater than or equal to a reference bandwidth.

26. A terminal, comprising: a processing unit and a communication unit, wherein
the processing unit is configured to receive a plurality of frequency division discovery signals (DRSs) from a network device, wherein a maximum channel bandwidth determined by frequency domain positions of the plurality of frequency division DRSs is greater than or equal to a reference bandwidth.

27. A network device, comprising: a processor, a memory, a transceiver, and one or more programs, wherein the one or more programs are stored in the memory and configured to be executed by the processor, and the program comprises instructions for performing acts of the method of any one of claims 1-12.

28. A terminal, comprising: a processor, a memory, a communication interface, and one or more programs, wherein the one or more programs are stored in the memory and configured to be executed by the processor, and the program comprises instructions for performing acts of the method of any one of claims 13-24.

29. A computer-readable storage medium, storing a computer program for electronic data interchange, wherein the computer program causes a computer to perform the method of any one of claims 1-12.

30. A computer-readable storage medium, storing a computer program for electronic data interchange, wherein the computer program causes a computer to execute the method of any one of claims 13-24.
